# EUROPÄISCHE PATENTSCHRIFT

(11) **EP 4 172 585 B1**
(45) Veröffentlichungstag und Bekanntmachung des Hinweises auf die Patenterteilung: **09.10.2024**
(21) Anmeldenummer: 21729458.6
(22) Anmeldetag: 25.05.2021
(51) Int. Cl.: G01M 3/00

(54) **PRUEFLECKVORRICHTUNG**
TEST LEAKAGE DEVICE
DISPOSITIF DE FUITE DE TEST

(30) Priorität: 26.06.2020 DE 102020116939
(43) Veröffentlichungstag der Anmeldung: 03.05.2023
(73) Patentinhaber: Inficon GmbH, 50968 Köln (DE)
(72) Erfinder: WETZIG, Daniel, 50968 Köln (DE); REISMANN, Maximilian, 50968 Köln (DE); GRENZ, Josef, 50968 Köln (DE); VAN TRIEST, Hendrik, 50968 Köln (DE)
(74) Vertreter: dompatent von Kreisler Selting Werner - Partnerschaft von Patent- und Rechtsanwälten mbB
(86) Internationale Anmeldenummer: PCT/EP2021/063920
(87) Internationale Veröffentlichungsnummer: WO 2021/259579

(56) Entgegenhaltungen:
- DE-A1- 10 122 733
- DE-A1- 10 162 126

## Beschreibung

Die Erfindung betrifft eine Prüfleckvorrichtung zum Prüfen der Funktionsfähigkeit und zum Kalibrieren einer Gaslecksuchvorrichtung.

Gaslecksuchvorrichtungen weisen typischerweise eine evakuierbare Prüfkammer auf, in die ein gasgefüllter oder flüssigkeitsgefüllter Prüfling eingelegt wird. An die Prüfkammer ist eine Gasanalysevorrichtung angeschlossen, die das aus der Prüfkammer abgesaugte Gas analysiert, um mögliches Leckagegas, das aus einem Leck im Prüfling in die Prüfkammer ausgetreten ist, oder aus dem Leck austretende und verdampfende Flüssigkeit zu detektieren. Von besonderer Bedeutung ist es dabei, aus der Menge des ermittelten Leckagegases auf die Größe des Lecks schließen zu können. Hierzu finden Prüfleckvorrichtungen Verwendung, die eine vorgegebene Menge eines bekannten Prüfgases oder Prüffluides enthalten und mit einem Leck mit bekannten Abmessungen und/oder mit bekannter Durchlässigkeit für das enthaltene Fluid versehen sind. Prüfleckvorrichtungen werden typischerweise dazu eingesetzt, die Funktionsfähigkeit einer Gaslecksuchvorrichtung zu überprüfen und die Gaslecksuchvorrichtung zu kalibrieren.

Das Leck einer Prüfleckvorrichtung ist oftmals als Membran ausgebildet, deren Leckrate von der Permeabilität des Membrankörpers für das jeweilige Testgas bzw. Testfluid, von der Membrantemperatur, von der Temperatur und dem Dampfdruck des Testgases/Testfluides, von dem Benetzungsgrad der Membran auf der Innenseite/Fluidseite und von der Belüftung auf der Austrittsseite der Membran, d.h. auf der Außenseite der Prüfleckvorrichtung, abhängt.

In EP 2 447 694 B1 wird beispielsweise ein flüssigkeitsgefülltes Prüfleck beschrieben, aus dem Gas oder Dampf oder von Gas transportierte Flüssigkeitsbestandteile austreten. Die aus dem Prüfleck austretenden Gase bzw. der austretende Dampf oder die vom Gas transportierten austretenden Flüssigkeitsbestandteile werden von der Flüssigkeit durch den ihr eigenen Dampfdruck oder durch Permeation durch eine Festkörperschicht einer Membran gebildet.

Die Leckrate eines Membran-Testlecks hängt davon ab, ob und wie stark die Innenseite der Membran mit Flüssigkeit benetzt ist. Hierbei kann erheblichen Einfluss auf die Leckrate haben, ob direkt eine Flüssigkeit oder lediglich Flüssigkeitsdampf an der Membran anliegt. Um eine stabile Leckrate zu erreichen, sollte also entweder verhindert werden, dass Flüssigkeit die Membran erreicht oder gewährleistet sein, dass nur Flüssigkeitsdampf in Kontakt zur Membran gelangt.

In DE 10 2014 200 907 B4 ist ein Referenzausgasungssystem mit einem Reservoir beschrieben, das ein Fluid oder ein Fluidgemisch enthält. Eine Transportvakuumkammer umgibt das Reservoir. In der Transportvakuumkammer herrscht ein Kammerdruck von weniger als 10 kPa.

DE 10122733 A1 beschreibt eine Testleckvorrichtung mit einem Testgasspeicher und einem Testgasauslass.

Der Erfindung liegt die Aufgabe zugrunde, eine verbesserte Prüfleckvorrichtung mit einer Membran mit stabiler Leckrate zu schaffen.

Die erfindungsgemäße Prüfleckvorrichtung ist definiert durch die Merkmale von Patentanspruch 1 oder durch die Merkmale von Patentanspruch 2.

Demnach weist die Prüfleckvorrichtung einen Boden, einen Deckel und mindestens eine den Boden mit dem Deckel verbindende Seitenwand auf, wobei der Boden, der Deckel und die Seitenwand einen mit einem Testgas oder mit einer Testflüssigkeit befüllbaren Innenraum umschließen. Die Prüfleckvorrichtung ist mit einer Membran versehen, die für das Testgas oder für Bestandteile der Testflüssigkeit permeabel ist, so dass das Testgas oder Bestandteile der Testflüssigkeit durch die Membran aus der Prüfleckvorrichtung austreten können.

Die Besonderheit der Erfindung besteht darin, dass die Membran in dem Boden der Prüfleckvorrichtung vorgesehen ist, und einander gegenüberliegende Abschnitte der dem Innenraum zugewandten Innenseite der Seitenwand im Bereich des Deckels einen größeren Abstand zueinander aufweisen als im Bereich des Bodens. Dies führt dazu, dass der Abstand zwischen den gegenüberliegenden Abschnitten der Seitenwand vom Deckel in Richtung auf den Boden abnimmt, so dass das im Innenraum enthaltene Testfluid entlang der Abschnitte der Seitenwand von der Schwerkraft in Richtung auf die Membran geführt wird.

Alternativ kann eine Vertiefung in dem Boden der Prüfleckvorrichtung ausgebildet sein, wobei die Vertiefung eine dem Innenraum zugewandte Innenseite aufweist und einander gegenüberliegende Abschnitte dieser Innenseite im Bereich des Deckels einen größeren Abstand zueinander aufweisen als im Bereich des Bodens. Das heißt mit anderen Worten, dass die einander gegenüberliegenden Abschnitte der Innenseite einen von oben (aus Richtung des Deckels) nach unten (in Richtung auf den Boden) abnehmenden Abstand aufweisen.

Vorzugsweise nimmt der Abstand der einander gegenüberliegenden Abschnitte der dem Innenraum zugewandten Innenseite der Seitenwand bzw. der Vertiefung kontinuierlich vom Deckel hin zum Boden ab. Die Innenseite kann den Innenraum zylindrisch umgeben und insbesondere konisch in Richtung auf die Membran zulaufen. Von besonderem Vorteil ist es dabei, wenn die Innenseite im Bereich des Bodens an die Membran oder an eine im Boden ausgebildete und die Membran enthaltende Durchgangsöffnung angrenzt.

Dabei können die Durchgangsöffnung und/oder die Membran zylindrisch ausgebildet sein und eine dem Innenraum zugewandte Kreisfläche aufweisen, an deren äußerem Rand die Innenseite der Seitenwand bzw. der Vertiefung angrenzt.

Die von dem Innenraum abgewandte Unterseite des Bodens, d.h. die Außenseite des Bodens, die dem Boden einer Prüfkammer zugewandt ist, wenn die Prüfleckvorrichtung auf dem Boden einer Prüfkammer einer Gaslecksuchvorrichtung positioniert ist, ist vorteilhafterweise mit mindestens einem Abstandshalter versehen, der verhindert, dass die Bodenunterseite den Boden der Prüfkammer kontaktiert, wenn die Prüflingsvorrichtung in der Prüfkammer enthalten ist. Durch die Abstandshalter ist ein Ausströmen des Testfluides oder des Dampfes des Testfluides aus der Prüfleckvorrichtung aus der Membran in die Prüfkammer im Bereich zwischen der Prüfleckvorrichtung und dem Prüfkammerboden erleichtert und ein gleichmäßiges Verteilen des Testfluides oder Dampfes in der Prüfkammer ermöglicht.

Vorzugsweise weist die Prüfleckvorrichtung eine mit einem Ventil verschlossene Befüllöffnung auf.

Die Erfindung bietet den Vorteil, dass aufgrund des zur Membran oder Durchgangsöffnung im Boden hin abnehmenden Abstands zwischen den gegenüberliegenden Abschnitten der Innenseite der Membrankörper gleichmäßig mit Testfluid benetzt wird, da die Schwerkraft das Testfluid innerhalb der Prüfleckvorrichtung in Richtung auf den Boden und somit in Richtung auf die Membran bewegt. Das von dem Boden, dem Deckel und der Seitenwand der Prüfleckvorrichtung umgrenzte Vorratsvolumen für das Testfluid verjüngt sich somit von oben nach unten zur Membran hin.

Im Folgenden werden anhand der Figuren Ausführungsbeispiele der Erfindung näher erläutert. Es zeigen
- Fig. 1: einen Querschnitt durch ein erstes Ausführungsbeispiel der Prüfleckvorrichtung und
- Fig. 2: einen Querschnitt durch ein zweites Ausführungsbeispiel der Prüfleckvorrichtung.

Die Prüfleckvorrichtung weist in beiden Ausführungsbeispielen einen Boden 12 auf, der einstückig mit einer seitlich von dem äußeren Rand des Bodens aufragenden umlaufenden Seitenwand 14 umgeben ist. Ein Deckel 16 ist fluiddicht mit der Seitenwand derart verbunden, dass der Boden 12, die Seitenwand 14 und der Deckel 16 einen Innenraum 20 fluiddicht umschließen. Der Innenraum 20 kann daher mit einem Testfluid, d.h. einem Testgas oder einer Testflüssigkeit, befüllt werden.

Im Boden 12 ist eine den Innenraum 20 mit der äußeren Umgebung der Prüfleckvorrichtung verbindende Durchgangsöffnung 22 ausgebildet, in die eine Membran 24 eingesetzt ist, die für das Testfluid oder für Bestandteile des Testfluides permeabel ausgebildet ist. Dadurch kann das in dem Innenraum 20 enthaltene Testfluid die Prüfleckvorrichtung ausschließlich durch die Membran 24 verlassen.

Die Seitenwand 14 ist als zylindrisch entlang des äußeren Umfangs des Bodens 12 umlaufender von dem Boden 12 aufragender Ring ausgebildet, dessen Innenseite 26 einen Konus bildet, der sich in Richtung auf die Membran 24 und die Durchgangsöffnung 22 verjüngt. Der Konus weist an seinem unteren, dem Boden 12 zugewandten Ende eine mittlere Öffnung auf, die in die Durchgangsöffnung 22 mündet und an die Membran 24 angrenzt.

Dadurch, dass der Boden 12 und die Seitenwand 14 einstückig miteinander verbunden sind, kann der Konus der Innenseite 26 auch als Vertiefung in dem Boden 12 betrachtet werden.

Das in dem Innenraum 20 enthaltene Testfluid strömt entlang der Innenseite 18 aufgrund der Wirkung der Schwerkraft und des sich in Richtung auf die Durchgangsöffnung 22 und die Membran 24 verjüngenden Durchmessers des Innenraums 20 in die Durchgangsöffnung 22 hinein und in Richtung auf die Membran 24. Die Membran wird dadurch gleichmäßig von Testfluid benetzt, sobald die Prüfleckvorrichtung 10 aufrecht auf einem Untergrund, wie z.B. dem Boden 32 der Prüfkammer 34 einer in den Figuren nicht vollständig dargestellten Gaslecksuchvorrichtu ng.

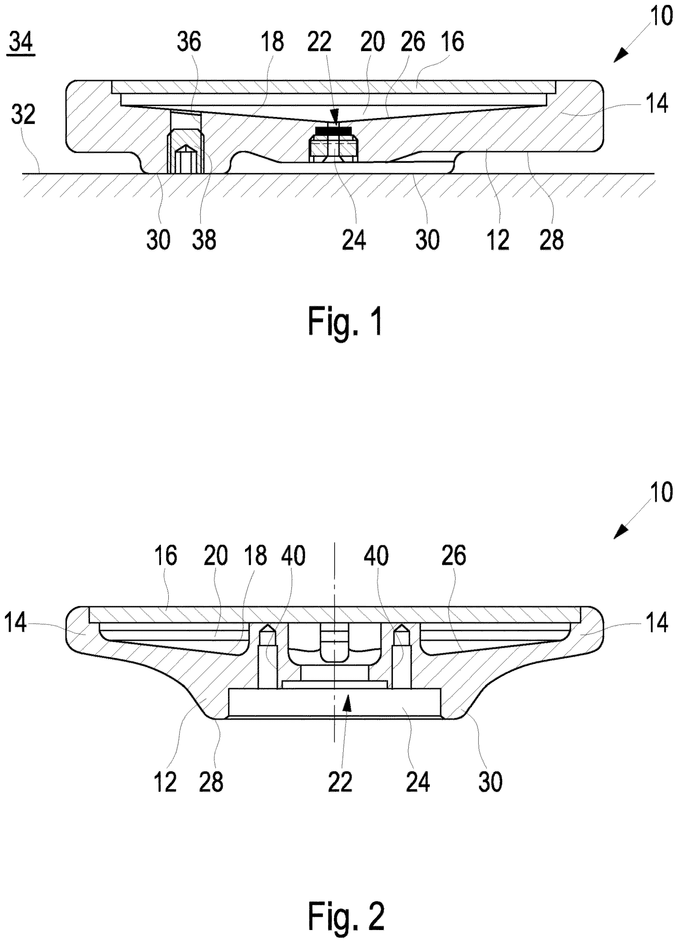

Die Unterseite 28 des Bodens 12 ist bei dem Ausführungsbeispiel nach Fig. 1 mit mehreren Abstandshaltern 30 in Form von nach unten über die Unterseite 28 hinausragenden Vorsprüngen 30 versehen. Die Abstandshalter 30 bewirken einen Abstand zwischen der Unterseite 28 und dem Boden einer Prüfkammer, wenn die Prüfleckvorrichtung 10 auf dem Prüfkammerboden steht. Der Boden der Prüfkammer ist in der Figur mit dem Bezugszeichen 32 versehen, während die Prüfkammer mit dem Bezugszeichen 34 gekennzeichnet ist.

Der Boden 12 ist im Bereich eines der Abstandshalter 30 mit einer den Innenraum 20 mit der äußeren Umgebung der Prüfleckvorrichtung 10 verbindenden Befüllöffnung 36 versehen, die mit einem Ventil 38 verschlossen ist. Das Ventil 38 ist derart ausgebildet, dass Testfluid von außen in den Innenraum 20 eingefüllt werden kann, jedoch nicht durch die Befüllöffnung 36 aus dem Innenraum 20 nach außen gelangen kann.

Bei dem Ausführungsbeispiel nach Figur 2 weist die Unterseite 28 des Bodens 12 eine nach Art eines Tellers ausgebildete, die Durchgangsöffnung 22 konzentrisch umgebende Form auf, ohne dass dem Boden separate Abstandshalter 30 einstückig angeformt sind. In das untere Ende der Durchgangsöffnung 22 ist die Membran 24 eingesetzt. Die Durchgangsöffnung 22 mündet mit gegenüber der Membran 24 reduzierten Durchmesser in den Innenraum 20. Die Durchgangsöffnung 22 ist dabei von Bohrlöchern 40 konzentrisch umgeben, in die Befestigungselemente in Form von Schrauben zur Befestigung der Membran 24 eingeführt und dort gehalten werden, im zweiten Ausführungsbeispiel durch eine herkömmliche Schraubverbindung mit Gewindeeingriff. Die in Figur 2 nicht dargestellten Schraubköpfe der von unten in Richtung nach oben in die Öffnungen 40 eingeführten Schrauben ragen nach unten über die Unterseite 28 des Bodens 12 hinaus und bilden dadurch Abstandshalter, vergleichbar mit den Abstandshaltern 30 des ersten Ausführungsbeispiels.

## Patentansprüche

1. Prüfleckvorrichtung (10) zum Prüfen der Funktionsfähigkeit und zum Kalibrieren einer Gaslecksuchvorrichtung, die eine evakuierbare Prüfkammer (34) zur Aufnahme eines Prüflings und/oder der Prüfleckvorrichtung (10) aufweist, wobei die Prüfleckvorrichtung (10) einen Boden (12), einen Deckel (16) und mindestens eine den Boden (12) mit dem Deckel (16) verbindende Seitenwand (14) aufweist, die einen mit einem Testgas oder mit einer Testflüssigkeit befüllbaren Innenraum (20) umschließen,
wobei der Boden (12) eine für das Testgas oder Bestandteile der Testflüssigkeit permeable Membran (24) aufweist und
einander gegenüberliegende Abschnitte der dem Innenraum (20) zugewandten Innenseite (18) der Seitenwand (14) im Bereich des Deckels einen größeren Abstand zueinander aufweisen als im Bereich des Bodens,
**dadurch gekennzeichnet,**
**dass** der Abstand der einander gegenüberliegenden Abschnitte der dem Innenraum (20) zugewandten Innenseite (18) der Seitenwand (14) kontinuierlich vom Deckel (16) zum Boden (12) abnimmt.

2. Prüfleckvorrichtung (10) zum Prüfen der Funktionsfähigkeit und zum Kalibrieren einer Gaslecksuchvorrichtung, die eine evakuierbare Prüfkammer (34) zur Aufnahme eines Prüflings und/oder der Prüfleckvorrichtung (10) aufweist, wobei die Prüfleckvorrichtung (10) einen Boden (12), einen Deckel (16) und mindestens eine den Boden (12) mit dem Deckel (16) verbindende Seitenwand (14) aufweist, die einen mit einem Testgas oder mit einer Testflüssigkeit befüllbaren Innenraum (20) umschließen,
wobei der Boden (12) eine für das Testgas oder Bestandteile der Testflüssigkeit permeable Membran (24) aufweist und
dass der Boden eine Vertiefung mit einer dem Innenraum (20) zugewandten Innenseite (18) aufweist, wobei einander gegenüberliegende Abschnitte der Innenseite (18) an ihrem dem Deckel zugewandten Ende einen größeren Abstand zueinander aufweisen als an ihrem dem Deckel abgewandten Ende,
**dadurch gekennzeichnet,**
**dass** der Abstand der einander gegenüberliegenden Abschnitte der dem Innenraum (20) zugewandten Innenseite (18) kontinuierlich von ihrem dem Deckel (16) zugewandten Ende zu ihrem dem Deckel abgewandten Ende abnimmt.

3. Prüfleckvorrichtung (10) nach einem der vorhergehenden Ansprüche, **dadurch gekennzeichnet, dass** die Innenseite (18) der Seitenwand (14) den Innenraum (20) zylindrisch umgibt und konisch in Richtung auf die Membran zuläuft.

4. Prüfleckvorrichtung (10) nach einem der vorhergehenden Ansprüche, **dadurch gekennzeichnet, dass** die Innenseite der Seitenwand (14) im Bereich des Bodens an eine die Membran (24) aufweisende Durchgangsöffnung (22) angrenzt.

5. Prüfleckvorrichtung (10) nach Anspruch 4, **dadurch gekennzeichnet, dass** die Durchgangsöffnung (22) zylindrisch ausgebildet ist und eine dem Innenraum zugewandte Kreisfläche aufweist, an deren äußeren Rand die Innenseite der Seitenwand (14) angrenzt.

6. Prüfleckvorrichtung (10) nach einem der vorhergehenden Ansprüche, **dadurch gekennzeichnet, dass** die dem Innenraum (20) abgewandte Unterseite (28) des Bodens (12) mit mindestens einem Abstandshalter (30) versehen ist, der verhindert, dass die Bodenunterseite (28) den Boden (32) der Prüfkammer kontaktiert, wenn die Prüfleckvorrichtung in der Prüfkammer enthalten ist.

7. Prüfleckvorrichtung (10) nach einem der vorhergehenden Ansprüche, **dadurch gekennzeichnet, dass** die Prüfleckvorrichtung eine mit einem Ventil (38) verschlossene Befüllöffnung (36) aufweist.

8. Prüfleckvorrichtung (10) nach einem der vorhergehenden Ansprüche, **dadurch gekennzeichnet, dass** der Boden (12) und die Seitenwand (16) als einstückiges Teil ausgebildet sind und die Innenseite (18) als Vertiefung in dem einstückigen Teil ausgebildet ist.

## Claims

1. A test leakage device (10) for testing the functionality and for calibrating a gas leak detection device having an evacuable test chamber (34) for receiving a test object and/or the test leakage device (10), wherein the test leakage device (10) has a base (12), a cover (16) and at least one side wall (14) connecting the base (12) to the cover (16), which side wall (14) surrounds an interior space (20) which can be filled with a test gas or a test liquid,
wherein the base (12) has a membrane (24) which is permeable to the test gas or constituents of the test liquid, and
mutually opposite sections of the inner side (18) of the side wall (14) which faces the interior space (20) are at a greater distance from one another in the region of the cover than in the region of the base,
**characterized in that**
the distance of the mutually opposite sections of the inner side (18) of the side wall (14) facing the interior space (20) decreases continuously from the cover (16) to the base (12).

2. A test leakage device (10) for testing the functionality and for calibrating a gas leak detection device having an evacuable test chamber (34) for receiving a test object and/or the test leakage device (10), wherein the test leakage device (10) has a base (12), a cover (16) and at least one side wall (14) connecting the base (12) to the cover (16), which side wall (14) surrounds an interior space (20) which can be filled with a test gas or a test liquid,
wherein the base (12) has a membrane (24) which is permeable to the test gas or constituents of the test liquid, and
the base has a recess with an inner side (18) facing the interior space (20), wherein mutually opposite sections of the inner side (18) are at a greater distance from one another in the region of the cover than in the region of the base,
**characterized in that**
the distance of the mutually opposite sections of the inner side (18) facing the interior space (20) decreases continuously from its end facing the cover (16) to its end averted from the cover.

3. The test leakage device (10) according to one of the preceding claims, **characterized in that** the inner side (18) of the side wall (14) cylindrically surrounds the interior space (20) and conically tapers towards the membrane.

4. The test leakage device (10) according to one of the preceding claims, **characterized in that**, in the region of the base, the inner side of the side wall (14) adjoins a through opening (22) comprising the membrane (24).

5. The test leakage device (10) according to claim 4, **characterized in that** the through opening (22) is formed in a cylindrical shape and has a circular surface facing the interior, the outer edge of which adjoins the inner side of the side wall (14).

6. The test leakage device (10) according to one of the preceding claims, **characterized in that** the lower side (28) of the base (12) facing away from the interior space (20) is provided with at least one spacer (30) that prevents the lower side (28) of the base from contacting the bottom (32) of the test chamber, when the test leakage device is contained in the test chamber.

7. The test leakage device (10) according to one of the preceding claims, **characterized in that** the test leakage device has a filling opening (36) closed with a valve (38).

8. The test leakage device (10) according to one of the preceding claims, **characterized in that** the base (12) and the side wall (16) are formed as an integral part and the inner side (18) is formed as a recess in the integral part.

## Revendications

1. Dispositif de fuite de test (10) permettant de vérifier la capacité de fonctionnement et de calibrer un dispositif de détection de fuite de gaz qui comprend une chambre de test (34) qui peut être mise sous vide et qui peut accueillir un échantillon de test et/ou le dispositif de fuite de test (10), le dispositif de fuite de test (10) comprenant un fond (12), un couvercle (16) et au moins une paroi latérale (14) reliant le fond (12) au couvercle (16), qui entourent un espace intérieur (20) pouvant être rempli d'un gaz de test ou d'un liquide de test,
le fond (12) comprenant une membrane (24) perméable au gaz de test ou aux constituants du liquide de test et
des sections se faisant face les unes les autres et appartenant à la face intérieure (18), tournée vers l'espace intérieur (20), de la paroi latérale (14) présentent les unes par rapport aux autres une distance qui est plus grande dans la zone du couvercle que dans la zone du fond,
**caractérisé en ce que**
la distance entre les sections se faisant face les unes les autres et appartenant à la face intérieure (18), tournée vers l'espace intérieur (20), de la paroi latérale (14) diminue continuellement du couvercle (16) jusqu'au fond (12).

2. Dispositif de fuite de test (10) permettant de vérifier la capacité de fonctionnement et de calibrer un dispositif de détection de fuite de gaz qui comprend une chambre de test (34) qui peut être mise sous vide et qui peut accueillir un échantillon de test et/ou le dispositif de fuite de test (10), le dispositif de fuite de test (10) comprenant un fond (12), un couvercle (16) et au moins une paroi latérale (14) reliant le fond (12) au couvercle (16), qui entourent un espace intérieur (20) pouvant être rempli d'un gaz de test ou d'un liquide de test,
le fond (12) comprenant une membrane (24) perméable au gaz de test ou aux constituants du liquide de test et
le fond comprenant un renfoncement avec une face intérieure (18) tournée vers l'espace intérieur (20), des sections se faisant face les unes les autres et appartenant à la face intérieure (18) présentent les unes par rapport aux autres une distance qui est plus grande à leur extrémité tournée vers le couvercle qu'à leur extrémité opposée au couvercle,
**caractérisé en ce que**
la distance entre les sections se faisant face les unes les autres et appartenant à la face intérieure (18), tournée vers l'espace intérieur (20), de la paroi latérale (14) diminue continuellement de leur extrémité tournée vers le couvercle (16) jusqu'à leur extrémité opposée au couvercle.

3. Dispositif de fuite de test (10) selon l'une quelconque des revendications précédentes, **caractérisé en ce que** la face intérieure (18) de la paroi latérale (14) entoure l'espace intérieur (20) de manière cylindrique et se rétrécit de manière conique en direction de la membrane.

4. Dispositif de fuite de test (10) selon l'une quelconque des revendications précédentes, **caractérisé en ce que** la face intérieure de la paroi latérale (14) est adjacente, dans la zone du fond, à un orifice de passage (22) comprenant la membrane (24).

5. Dispositif de fuite de test (10) selon la revendication 4, **caractérisé en ce que** l'orifice de passage (22) est de forme cylindrique et comprend une surface circulaire tournée vers l'espace intérieur, la face intérieure de la paroi latérale (14) étant adjacente au bord extérieur de ladite surface circulaire.

6. Dispositif de fuite de test (10) selon l'une quelconque des revendications précédentes, **caractérisé en ce que** la face inférieure (28), opposée à l'espace intérieur (20), du fond (12) est munie d'au moins une pièce d'écartement (30) qui empêche la face inférieure de fond (28) de venir en contact avec le fond (32) de la chambre de test lorsque le dispositif de fuite de test est contenu dans la chambre de test.

7. Dispositif de fuite de test (10) selon l'une quelconque des revendications précédentes, **caractérisé en ce que** le dispositif de fuite de test comprend un orifice de remplissage (36) fermé par une soupape (38).

8. Dispositif de fuite de test (10) selon l'une quelconque des revendications précédentes, **caractérisé en ce que** le fond (12) et la paroi latérale (16) sont réalisés sous la forme d'une pièce d'un seul tenant et la face intérieure (18) est réalisée sous la forme d'un renfoncement dans la pièce d'un seul tenant.
